## Europäisches Patentamt
## European Patent Office
## Office européen des brevets

(19)

(11) Publication number: **0 148 592**
**A2**

(12)

# EUROPEAN PATENT APPLICATION

(21) Application number: **84308507.7**

(51) Int. Cl.⁴: **C 08 F 8/00**

(22) Date of filing: **06.12.84**

(30) Priority: **10.12.83 GB 8333031**

(71) Applicant: **The British Petroleum Company p.l.c., Britannic House Moor Lane, London EC2Y 9BU (GB)**

(72) Inventor: **Alper, Howard, 17 Winlock Crescent, Ottawa K2G 3X5 (CA)**
Inventor: **Smith, David J. H. The British Petroleum Co. plc, Chertsey Road, Sunbury-on-Thames Middlesex TW16 7LN (GB)**

(43) Date of publication of application: **17.07.85**
**Bulletin 85/29**

(74) Representative: **Harry, John et al, BP INTERNATIONAL LIMITED Patents Division Chertsey Road, Sunbury-on-Thames Middlesex TW16 7LN (GB)**

(84) Designated Contracting States: **BE DE FR GB IT NL**

(54) **Process for the production of carboxylic acid esters and/or carboxylic acids.**

(57) Carboxylic acid ester functionalised derivatives of polymeric compounds containing residual carbon-carbon double bonds, for example polyisobutylenes and ethylene-based copolymers and terpolymers, are produced by reacting the polymeric compound with carbon monoxide and an alcohol in the presence of a protonic acid and as catalyst (a) at least one of the metals palladium, rhodium, ruthenium, iridium and cobalt in elemental or compound form and (b) a copper compound. In a modification of the invention carboxylic acid derivatives are produced by replacing the alcohol reactant with less than 8 mole equivalents, based on the polymeric compound, of water.

1

## PROCESS FOR THE PRODUCTION OF CARBOXYLIC ACID
## ESTERS AND/OR CARBOXYLIC ACIDS

The present invention relates to a process for the production of carboxylic acid esters and/or carboxylic acids by the catalysed reaction of an unsaturated hydrocarbon, carbon monoxide and either water or an alcohol, optionally in the presence of oxygen.

Processes for the production of esters by reacting an olefin with carbon monoxide and an alcohol in the presence of a catalyst and in the presence or absence of oxygen are known. Representative of the published art are US Patent No 4303589, Belgian Patent No 877770, Japanese Patent Publication No 53040709 and US Patent No 3780074.

US Patent No 4303589 (Monsanto) describes a process for the production of carboxylate esters by (a) reacting internal olefins with carbon monoxide and an alcohol at 170 to 200°C and 1200-1800 psig in the presence of a cobalt catalyst and a pyridine promoter, (b) diluting the reaction mixture with a large amount of hydrocarbon to cause phase separation, (c) separating the ester from the other phase, which contains more than 90% of the cobalt catalyst and (d) recycling the catalyst to step (a).

Belgian Patent No 877770 describes the production of polycarboxylic esters by reacting an olefin containing at least two conjugated double bonds with carbon monoxide and an alcohol in the presence of a base and a palladium/copper catalyst.

Japanese Patent Publication No 5 3040 709 describes the production of dicarboxylic acid diesters by reacting an olefin, carbon monoxide, oxygen and an alcohol in the presence of a catalyst containing (a) a palladium group metal or a compound thereof, (b) a copper salt and (c) a tertiary amine.

USP 3,780,074 describes the production of alkadienoic acid esters by reacting a 4-12 carbon acyclic conjugated aliphatic diolefin with a 1 to 20 carbon monohydroxy alcohol and carbon monoxide in the presence of zero valent palladium and a phosphine activator at 80 to 160°C in the absence of oxygen.

Our copending European application publication No.83305810.0 (BP Case No.5407/5539/5581) describes and claims a process for the production of a carboxylic acid ester and/or a carboxylic acid which process comprises reacting an unsaturated hydrocarbon with carbon monoxide and either an alcohol or water in the presence of a protonic acid and as catalyst (a) at least one of the metals palladium, rhodium, ruthenium, iridium and cobalt, and (b) copper, provided that for the production of a carboxylic acid a solvent other than an alcohol is employed and that the amount of water is less than 5 mole equivalents based on the unsaturated hydrocarbon reactant.

None of the aforesaid prior art describes the use of polymeric compounds, particularly hydrocarbon polymers containing residual carbon-carbon double bonds as starting materials. Polymeric hydrocarbons, such as polybutenes, have a wide variety of uses, of which probably one of the most important is as viscosity index improver additives in lubricating oil formulations. In recent years research has been directed to the production of multifunctional lubricating oil additives, for example additives which have in addition to their viscosity index improver capability other properties, such as dispersancy or detergency functions. In pursuit of this objective functional groups have been introduced into polymer molecules by reacting the residual carbon-carbon unsaturation with a variety of compounds. It would be a desirable objective to introduce carboxylic acid ester and/or carboxylic acid groups into polymeric compounds containing residual carbon-carbon double bonds. Such groups can be further reacted, if desired with for example amines.

We have found that the aforesaid objective can be achieved by reaction with carbon monoxide and either an alcohol or water in the presence of a protonic acid and as catalyst (a) at least one of the metals palladium, rhodium, ruthenium, iridium and cobalt, and (b) copper, both in the presence and the absence of oxygen.

Accordingly, in one aspect the present invention provides a process for the production of a carboxylic acid ester functionalised derivative of a polymeric compound containing residual carbon-carbon double bonds which process comprises reacting the polymeric compound with carbon monoxide and an alcohol in the presence of a protonic acid and as catalyst (a) at least one of the metals palladium, rhodium, ruthenium, iridium and cobalt, in elemental or compound form, and (b) a copper compound.

The polymeric compound containing carbon-carbon double bonds may suitably be a hydrocarbon polymer, suitably containing greater than 20, for example greater than 30 carbon atoms. A suitable hydrocarbon polymer is a butene polymer, for example that which is generally referred to as a polybutene, i.e. the low molecular weight liquid obtained from polymerisation of a refinery butane-butenes stream. A preferred butene polymer is that generally known as a polyisobutylene, sometimes referred to as a polyisobutene (PIB) i.e. the low to medium molecular weight liquid polymerisation product obtained from polymerisation of at least partially purified isobutylene feeds. Preferably the polyisobutylene has at least 80% of its carbon-carbon double bonds in the form of terminal double bonds. Examples of suitable polyisobutylenes for use in the process of the invention are liquid polyisobutylenes having a number average molecular weight in the range from 200 up to 2500, preferably up to about 1000. Another type of hydrocarbon polymer which may be employed is an ethylene copolymer, for example a copolymer comprising units derived from ethylene and propylene, and ethylene terpolymers comprising units derived from ethylene, propylene and a non-conjugated acyclic or alicyclic diolefin, for example, 1,4-hexadiene, 1,5-heptadiene, 1,6-octadiene, 1,4-cyclohexadiene, 1,5-heptadiene, 1,6-octadiene, 1,4-cyclohexadiene, 5-methylene2-norbornene and 5-ethylidene-2-norbornene. Yet another type of polymer which may be employed in the process of the invention is the class of vinyl aromatic/diene copolymers, which may be random, block or tapered copolymers. The vinyl aromatic units in the copolymer may suitably be derived from styrene or alpha methyl styrene and the diene units may be derived from butadiene or isoprene. Solid hydrocarbon polymers may be employed in the form of a solution thereof in a suitable diluent.

The carbon monoxide may be provided by any suitable source. The carbon monoxide pressure may suitably be the autogenous pressure at the reaction temperature employed. Alternatively, elevated pressures, suitably in the range from 2 to 250 psig above the autogenous pressure at the reaction temperature may be employed.

As regards the alcohol reactant, monohydric and polyhydric alcohols may be employed. Suitable alcohols may be represented by the formula $R_2CHOH$ wherein R is independently hydrogen, alkyl, aryl or hydroxyalkyl, or the two groups R together form a ring. Suitably the alcohol is an alkanol. Examples of suitable alcohols include methanol, ethanol, propanols, butanols, pentanols, hexanols, for example 2-ethylhexanol, benzyl alcohol and 1,4-butanediol. The amount of alcohol employed may suitably be at least the stoichiometric amount required to react with the polymeric compound. It is preferred, however, to employ a substantial excess of alcohol over the stoichiometric amount, the alcohol then performing the dual role of reactant and diluent for the reaction.

The protonic acid may be either a mineral acid, preferably hydrochloric acid or sulphuric acid, or an organic acid which may suitably be a carboxylic acid.

With regard to the catalyst, one or more of the metals palladium, rhodium, ruthenium, iridium and cobalt is employed as component (a). The metal(s) may be in the form of the elemental metal(s), such as a finely divided powder, or more preferably in the form of a compound of the metal(s). Suitable compounds of the metal(s) include the chlorides, iodides, acetates and nitrates, preferably the chlorides. Preferably the metal is palladium, suitably in the form of palladium (11) chloride.

Copper, which constitutes component (b) of the catalyst may suitably be added as a cuprous or a cupric compound or as a mixture thereof. A wide variety of copper compounds may be used in the process of the invention. Examples of suitable copper compounds include copper (I) acetate, copper (11) acetylacetonate, copper (I) bromide, copper (I) chloride, copper (11) chloride, copper (I) iodide, copper (II) nitrate, and the like.

As regards the ratios of the catalyst components, the molar ratio of copper component (b) to metal(s) component (a) may suitably be in the range from 1:1 to 200:1, preferably from 2:1 to 50:1.

The molar ratio of polymeric compound to the metal(s) component (a) may suitably be in the range from 5:1 to 1000:1, preferably from 10:1 to 250:1.

Oxygen may be present or absent. However, it is preferred to operate in the presence of oxygen because by doing so the product yields can be improved. Oxygen may be supplied to the reaction either as essentially pure oxygen or admixed with other gases which are substantially inert under the reaction conditions. Air may conveniently be used as the source of oxygen. The oxygen pressure may suitably be the autogenous pressure at the reaction temperature employed. Alternatively elevated pressures may be employed if desired.

A supplemental solvent may be employed if desired, particularly if normally solid polymeric compounds are used. The particular solvent employed may form a single phase with the alcohol reactant. Alternatively a solvent which is capable of forming a second liquid phase may be employed. The particular solvent employed should be inert under the reaction conditions. Suitable solvents which form a single phase with the alcohol reactant include oxygenated hydrocarbons, for example tetrahydrofuran. Suitable solvents capable of forming a second liquid phase include aliphatic hydrocarbons, cycloaliphatic hydrocarbons, aromatic hydrocarbons, alkyl-substituted aromatic hydrocarbons or halogenated aliphatic or aromatic hydrocarbons. Examples of suitable solvents capable of forming a second liquid phase include benzene, toluene, hexane, cyclohexane, chlorobenzene, bromobenzene, a xylene, dichloromethane, chloroform and 1,2-dichloroethane. It will be appreciated by those skilled in the art that the organic solvent should be chosen having regard to the difference in boiling points between the products of the reaction and the solvent so as to facilitate separation of the reaction mixture into its individual components. The amount of supplemental solvent based on the olefin reactant may vary over a wide range, suitably from 20 to 0.2, preferably from 5 to 1, volumes of supplemental solvent per volume of butene polymer reactant.

If, in a modification of the invention, the alcohol is replaced by water, provided that the amount of water is less than 8 mole equivalents based on the polymeric compound and a solvent other than an alcohol is employed, then instead of the carboxylic acid ester, there is formed the corresponding carboxylic acid.

Preferably the amount of water employed is less than 5, even more preferably about 1 mole equivalent based on the polymeric compound reactant.

Any suitable solvent other than an alcohol may be employed. Suitable solvents include ethers and hydrocarbons, for example paraffinic and aromatic hydrocarbons. Preferably the solvent is an ether. Examples of suitable ethers include tetrahydrofuran, dioxan, glymes and the crown ethers, of which tetrahydrofuran is preferred.

The process may suitably be operated at ambient temperature, though elevated temperatures, for example in the range 20 to 150°C or even higher may be employed. The reaction time may vary over a wide range, suitably from about 30 minutes to 8 hours, though longer reaction times may be employed if desired.

The process may be carried out batchwise or continuously, preferably continuously.

The invention will now be described in greater detail by reference to the following Examples. In the Examples reference will be made to Hyvis 4 and Hyvis 7. These are polyisobutylenes supplied by BP Chemicals Limited.

Example 1

A three-necked-100 ml RB flask was equipped with a stirrer bar, a condenser, an oxygen inlet and a carbon monoxide inlet. The following reagents were added to the flask in order: methanol (50 ml), carbon monoxide bubbled in, concentrated hydrochloric acid (1 ml), palladium (11) chloride (0.14g), copper (11) chloride (0.84g), oxygen bubbled in and HYVIS 04 (average molecular weight = 300, density = 0.83 g/ml) (7.8 mmoles; 2.82 ml). The reaction mixture was stirred at room temperature overnight with carbon monoxide and oxygen bubbling through it.

The reaction mixture was then extracted three times with hexane (250 ml total). The hexane solution was separated, dried over anhydrous magnesium (11) sulphate and concentrated to an oil. 2.5g of product was obtained. The presence of carboxylic acid esters was confirmed by infra-red spectroscopy of the product which showed absorbances at 1745 cm$^{-1}$.

Example 2

The procedure of Example 1 was repeated except that HYVIS07 (average molecular weight = 440; density = 0.855 g/ml) (7.8 mmoles; 4.02 ml) was used instead of HYVIS04.

2.9 g of product was obtained. The presence of carboxylic acid esters in this product was confirmed by infra-red spectroscopy, which showed absorbances at 1745 cm$^{-1}$.

Claims:

1. A process for the production of a carboxylic acid ester functionalised derivative of a polymeric compound containing residual carbon-carbon double bonds which process comprises reacting the polymeric compound with carbon monoxide and an alcohol in the presence of a protonic acid and as catalyst (a) at least one of the metals palladium, rhodium, ruthenium, iridium and cobalt in elemental or compound form, and (b) a copper compound.

2. A process for the production of a carboxylic acid functionalised derivative of a polymeric compound containing residual carbon-carbon double bonds which process comprises reacting, in the absence of an alcohol, the polymeric compound with carbon monoxide and water in an amount less than 8 mole equivalents based on the polymeric compound in the presence of a protonic acid and as catalyst (a) at least one of the metals palladium, rhodium, ruthenium, iridium and cobalt in elemental or compound form, and (b) a copper compound.

3. A process according to either claim 1 or claim 2 wherein the polymeric compound containing carbon-carbon double bonds is a hydrocarbon polymer.

4. A process according to claim 3 wherein the hydrocarbon polymer contains greater than 20 carbon atoms.

5. A process according to either claim 3 or claim 4 wherein the hydrocarbon polymer is a polybutene.

6. A process according to either claim 3 or claim 4 wherein the hydrocarbon polymer is a polyisobutylene.

7. A process according to claim 6 wherein the polyisobutylene has at least 80% of its carbon-carbon double bonds in the form of terminal double bonds.

8.   A process according to claim 3 wherein the hydrocarbon polymer is an ethylene terpolymer comprising units derived from ethylene, propylene and a non-conjugated acyclic or alicyclic diolefin.

9.   A process according to any one of claims 1 and 3 to 8 wherein the alcohol is an alkanol.

10.   A process according to any one of claims 2 to 9 wherein the amount of water employed is about 1 mole equivalent based on the polymeric compound.